# EUROPÄISCHE PATENTANMELDUNG

(11) **EP 4 553 966 A1**
(43) Veröffentlichungstag der Anmeldung: **14.05.2025**
(21) Anmeldenummer: 23208411.1
(22) Anmeldetag: 07.11.2023
(51) Int. Cl.: H01M 50/107, H01M 50/119, H01M 50/152, H01M 10/24, H01M 10/28, H01M 50/342

(54) **ELEKTROCHEMISCHE ENERGIESPEICHERZELLE**

(71) Anmelder: VARTA Microbattery GmbH, 73479 Ellwangen Jagst (DE)
(72) Erfinder: Geiß, Ludwig, 86720 Nördlingen (DE); Jose, Horst-Udo, 73479 Ellwangen (DE); Ried, Klaus-Bernd, 73479 Ellwangen (DE)
(74) Vertreter: Ostertag & Partner Patentanwälte mbB

(57) **Zusammenfassung**

Eine elektrochemische Energiespeicherzelle (100) umfasst ein Gehäuse mit einem metallischen Gehäusebecher (140) und einem Gehäusedeckel (150). Der Gehäusebecher (140) umfasst einen kreisrunden Becherboden und einen umlaufenden Gehäusebechermantel. Die Energiespeicherzelle umfasst eine positive und eine negative Elektrode (110, 120), die in dem Gehäuse angeordnet sind. Eine der Elektroden, vorzugsweise die positive Elektrode, ist als hohlzylinderförmige Elektrode (120) ausgebildet und umschließt einen Hohlraum, in dem die andere Elektrode (110), vorzugsweise die negative Elektrode, angeordnet ist. Der Becherboden weist einen kreisringförmigen ersten Bereich (170), in dem die hohlzylinderförmige Elektrode (120) auf dem Becherboden aufsitzt, und einen kreisförmigen zentralen zweiten Bereich (180), der von dem ersten Bereich (170) umschlossen ist, auf. Die Energiespeicherzelle zeichnet sich weiter dadurch aus, dass der Becherboden in dem ersten kreisringförmigen Bereich (170) mindestens eine Kerbe (200) aufweist, welche den Becherboden strukturell schwächt.

## Beschreibung

Die vorliegende Erfindung betrifft eine elektrochemische Energiespeicherzelle, die mit mindestens einer Sollrissstelle für den Fall eines Überdrucks in der Zelle ausgebildet ist.

### ANWENDUNGSGEBIET UND STAND DER TECHNIK

Es sind verschiedene Typen von elektrochemischen Energiespeicherzellen bekannt. Allgemein findet in solchen elektrochemischen Energiespeicherzellen eine elektrochemische, energieliefernde Reaktion statt, die sich aus zwei elektrisch miteinander gekoppelten, aber räumlich voneinander getrennten Teilreaktionen zusammensetzt. Eine bei vergleichsweise niedrigem Redoxpotential stattfindende Teilreaktion läuft an der negativen Elektrode ab. Eine bei vergleichsweise hohem Redoxpotential stattfindende Teilreaktion läuft an der positiven Elektrode ab. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zweck des Ladungsausgleichs zu einem der Elektrodenreaktion entsprechenden lonenstrom innerhalb der Energiespeicherzelle. Dieser lonenstrom durchquert einen Separator, der die Elektroden voneinander trennt, und wird durch einen ionenladenden Elektrolyten gewährleistet. Demgemäß umfasst jede elektrochemische Energiespeicherzelle mindestens eine positive Elektrode und mindestens eine negative Elektrode sowie mindestens einen Separator, der die positive und die negative Elektrode voneinander trennt.

Bei einer häufig eingesetzten Bauart von Energiespeicherzellen handelt es sich um die Alkali-Mangan-Zellen. Hierunter werden Zellen verstanden, die eine positive Elektrode aus Mangandioxid und eine negative Elektrode aus Zink sowie im Allgemeinen einen alkalischen Elektrolyten umfassen. Ein solcher Elektrolyt kann beispielsweise auf der Basis von Kaliumhydroxid gebildet sein. Oftmals ist die positive Elektrode als Hohlzylinder ausgebildet, dessen Außenseite die Innenseite eines becherförmigen, metallischen Zellengehäuses kontaktiert. Im Inneren dieses Hohlzylinders ist die negative Elektrode angeordnet, die insbesondere von einer Zinkpaste gebildet werden kann. Diese negative Elektrode ist durch einen Separator von der umgebenden positiven Elektrode getrennt, wobei der Separator die positive Elektrode physikalisch von der negativen Elektrode trennt und dabei gleichzeitig einen Ionentransport zwischen den beiden Elektroden zulässt. Im Inneren der Zelle wird die negative Elektrode in der Regel über einen metallischen, stiftförmigen Stromkollektor kontaktiert, der das negative Potential auf das metallische Gehäuse der Zelle überträgt. Das Gehäuse einer solchen Zelle wird üblicherweise von einem Gehäusebecher und einem Deckel gebildet, wobei der stiftförmige Stromkollektor mit dem Deckel in einem direkten elektrischen Kontakt steht. Eine derartige, an sich bekannte Alkali-Mangan-Zelle geht beispielsweise aus der EP 3245681 B1 hervor.

Die WO 2011/023447 A1 beschreibt eine Alkali-Mangan-Zelle, bei der die äußere, hohlzylindrische Elektrode aus mehreren ringförmigen Einzelsegmenten zusammengesetzt ist.

Bei vielen elektrochemischen Energiespeichern, auch bei Alkali-Mangan-Zellen, kann es zu einer Gasentwicklung im Inneren der Zelle kommen. Ursächlich für eine solche Gasentwicklung kann beispielsweise die Tiefenentladung der Zelle, eine Entladung durch externen Kurzschluss oder eine ungewollte Aufladung der Zelle bei deren Einbau in eine Reihenschaltung mit verkehrter Polung sein. In allen diesen Fällen kann durch die entstehenden Gase ein übermäßiger Innendruck entstehen, der die Zelle letztendlich zur Explosion bringen kann. Um dies zu vermeiden, sind derartige Zellen in der Regel mit einem Druckentlastungsmechanismus versehen, der ein Entweichen des Überdrucks ermöglicht.

Bei handelsüblichen Alkali-Mangan-Zellen ist eine Druckentlastungsfunktion in der Regel in der Gehäusedeckelkonstruktion der Zelle integriert. Hierbei ist in einer Kunststoffdichtung, die das Deckelbauteil gegenüber dem Gehäusebecher isoliert, eine Berstmembran als Sollrissstelle vorgesehen. Die Kunststoffdichtung bildet dabei eine bauliche Einheit mit dem Deckelbauteil der Zelle. Im Fall eines Überdrucks kann nach dem Öffnen der Berstmembran das Gas und eventuell Elektrolyt und/oder Bestandteile der Elektroden, insbesondere der negativen Elektrode, durch die dabei gebildeten Öffnungen austreten. Um das sichere Öffnen der Berstmembran zu gewährleisten, ist ein Abstand zwischen der Kunststoffdichtung und der Deckelscheibe erforderlich. Hierbei wird zwangsläufig ein Hohlraum gebildet, der nicht mit den elektrochemisch aktiven Komponenten der Zelle gefüllt werden kann und damit für die Energiespeicherfunktion verloren ist.

Andere Lösungen arbeiten mit einer Berstfunktion im Boden des becherförmigen Gehäuseteils. Bekannt sind insbesondere Einkerbungen im Becherboden, die als Sollrissstellen dienen. Damit im Fall eines Austretens von Gasen aus dem Inneren der Zelle kein unkontrolliertes Herausspritzen von Flüssigkeiten und gegebenenfalls festen Bestandteilen der Zelle auftritt, müssen insbesondere bei Alkali-Mangan-Zellen zusätzliche Maßnahmen ergriffen werden.

So beschreibt beispielsweise die DE 3337570 C2 eine Energiespeicherzelle, bei der in der Mitte des Becherbodens des becherförmigen Gehäuses der Zelle eine Kerbe als Sollbruchstelle vorgesehen ist. Der Boden der Zelle wird dabei von einer aufgeschweißten Abschlusskappe gebildet, die den positiven Zellenpol der Zelle bildet und die die Kerbe im Boden des Gehäusebechers überdeckt. Wenn sich die Sollbruchstelle bei entsprechendem Innendruck öffnet, wird austretendes Material durch die die darüberliegende Abschlusskappe abgebremst.

Zur Vermeidung eines unkontrollierten Herausspritzens aus einer Sollrissstelle ist aus der US 8158280 B2 das Aufschweißen einer Scheibe an drei Punkten auf dem Becherboden bekannt. Beim Bersten der Zelle biegt die Scheibe auf und der Druck kann zwischen Scheibe und Becherboden entweichen.

Die WO 2020/033090 A1 beschreibt eine Energiespeicherzelle mit einem Gehäusebecher und einem Deckel, wobei im Bereich des Bodens des Gehäusebechers eine Schwächungsstruktur zur Ausbildung einer ventilartigen Öffnung, insbesondere durch eine gebogene Schwächungslinie, vorgesehen ist. Bei einem auftretenden übermäßigen Innendruck in der Zelle biegt diese Schwächungsstruktur nach Art eines Ventils auf, so dass Gase austreten können. Zur Vermeidung des unkontrollierten Herausspritzens von Gasen, Flüssigkeiten und gegebenenfalls festen Bestandteilen aus dem Inneren der Zelle ist zusätzlich eine Filterscheibe im Inneren der Zelle vorgesehen.

Vor diesem Hintergrund stellt sich die Erfindung die Aufgabe, eine Energiespeicherzelle, insbesondere eine Alkali-Mangan-Zelle, bereitzustellen, die einen zuverlässigen und für den Anwender sicheren Überdruckschutz gewährleistet und dabei gleichzeitig auf zusätzliche Bauteile im Zusammenhang mit diesem Überdruckschutz verzichtet und zudem eine optimale Volumenausnutzung im Inneren der Zelle ermöglicht.

### AUFGABE UND LÖSUNG

Diese Aufgabe wird durch eine Energiespeicherzelle gelöst, wie sie Gegenstand des Anspruchs 1 ist. Bevorzugte Ausgestaltungen dieser Energiespeicherzelle ergeben sich aus den abhängigen Ansprüchen.

Die erfindungsgemäße elektrochemische Energiespeicherzelle zeichnet sich zunächst durch die folgenden Merkmale aus:
a. Die Energiespeicherzelle umfasst ein Gehäuse mit einem metallischen Gehäusebecher und einem metallischen Gehäusedeckel;
b. Der Gehäusebecher umfasst einen kreisrunden Becherboden und einen umlaufenden Gehäusebechermantel;
c. Die Energiespeicherzelle umfasst eine positive und eine negative Elektrode, die in dem Gehäuse angeordnet sind;
d. Eine der Elektroden, insbesondere die positive Elektrode, ist als hohlzylinderförmige Elektrode ausgebildet und umschließt einen Hohlraum, in dem die andere Elektrode, insbesondere die negative Elektrode, angeordnet ist;
e. Der Becherboden weist einen kreisringförmigen ersten Bereich, in dem die hohlzylinderförmige Elektrode auf dem Becherboden aufsitzt und einen kreisförmigen zentralen zweiten Bereich, der von dem ersten Bereich umschlossen ist, auf.

Dabei zeichnet sich die erfindungsgemäße Energiespeicherzelle weiter durch das folgende Merkmal aus:
f. Der Becherboden weist in dem kreisringförmigen ersten Bereich mindestens eine Kerbe auf, welche den Becherboden strukturell schwächt.

Gemäß dem vorgenannten Merkmal f. ist bei der erfindungsgemäßen Energiespeicherzelle die Überdruckfunktion in den Becherboden integriert, wobei der Becherboden mindestens eine strukturelle Schwächungsstelle in Form einer Kerbe aufweist, die als metallische Berstmembran ausgebildet ist. Diese Kerbe dient für den Fall eines Überdrucks im Inneren der Energiespeicherzelle als Sollrissstelle und sorgt dafür, dass der Überdruck durch austretendes Gas abgebaut werden kann, so dass es in einem solchen Fehlerfall nicht zu einer Explosion der Zelle kommt.

Insbesondere durch die nachfolgend noch näher erläuterte Positionierung, Ausbildung und Geometrie der mindestens einen Kerbe im Becherboden der Zelle wird dabei vermieden, dass es durch die aufgebrochene Kerbe zu einem unkontrollierten Austritt von Gasen, Flüssigkeiten und gegebenenfalls festen Bestandteilen aus dem Inneren der Zelle kommt, die eine Gefahr für einen Anwender in der Umgebung der Zelle bilden könnten. Ein besonderer Vorteil der erfindungsgemäßen Energiespeicherzelle liegt daher darin, dass keine weiteren besonderen Vorsichtsmaßen ergriffen werden müssen, wie beispielsweise zusätzliche Komponenten in Form einer aufgeschweißten Abschlusskappe im Bodenbereich der Zelle oder eine Filterscheibe im Inneren der Zelle, die austretendes Material ablenken würden, sodass durch diese zusätzlichen Maßnahmen ein unkontrolliertes Herausspritzen vermieden wird.

Die erfindungsgemäße Energiespeicherzelle mit der Sollrissstelle im Bereich des Becherbodens der Zelle hat darüber hinaus den besonderen Vorteil, dass keine Berstmembran in einem Deckelbauteil benötigt wird. Damit entfällt das Erfordernis des eingangs beschriebenen Hohlraums zwischen der Kunststoffdichtung und dem Deckelbauteil, das konstruktiv einfacher gestaltet werden kann. Die Dichtung in diesem Bereich kann beispielsweise wesentlich flacher ausgestaltet werden. Dies führt zu einer Erhöhung des nutzbaren Innenvolumens der Zelle. Das Volumen der Zelle kann nahezu vollständig für die elektrochemisch aktiven Komponenten der Zelle genutzt werden, so dass die Kapazität der Zelle durch bessere Ausnutzung des Innenvolumens um bis zu 2 % erhöht wird.

Darüber hinaus lässt sich der Berstdruck bei einer Sollrissstelle im Metall des Becherbodens gemäß der vorliegenden Erfindung präziser einstellen als bei einem Kunststoffteil. Insbesondere lässt sich der Öffnungsdruck bei einer Kerbe in einem Metallblech bei geeigneter Geometrie bis zu einer Genauigkeit von ± 1 bar einstellen. Bei einer Kunststoffdichtung hingegen, die in der Regel mit Mehrkavitätenwerkzeugen hergestellt wird, ist eine Spannbreite bei der Genauigkeit der Einstellung des Öffnungsdrucks von ± 20 bar die Regel. Die besonders genaue Einstellung des Öffnungsdrucks bei der erfindungsgemäßen Energiespeicherzelle erlaubt eine präzise Abstimmung zwischen dem Öffnungsdruck der Sollrissstelle und dem Berstdruck der Zelle und damit eine besonders sichere Konstruktion, die eine Explosion der Zelle sicher vermeidet.

In einer bevorzugten Ausgestaltung der erfindungsgemäßen Energiespeicherzelle zeichnet sich die erfindungsgemäße Energiespeicherzelle durch mindestens eines der folgenden zusätzlichen Merkmale aus:
a. Der kreisförmige zentrale zweite Bereich bildet oder umfasst den tiefsten Bereich des Becherbodens;
b. Der kreisringförmige erste Bereich umfasst einen außenliegenden kreisringförmigen Teilbereich, der mit dem Gehäusebechermantel einen Winkel von 80° bis 100°, insbesondere 90°, einschließt und der sich unmittelbar an den Gehäusebechermantel anschließt;
c. Der kreisringförmige erste Bereich umfasst einen innenliegenden kreisringförmigen Teilbereich, der einen Übergang zwischen den Ebenen des außenliegenden kreisringförmigen Teilbereichs und des kreisförmigen zentralen zweiten Bereichs bildet.

In besonders bevorzugter Weise sind die vorgenannten Merkmale a. und b. und, ganz besonders bevorzugt, die vorgenannten Merkmale a., b. und c. in Kombination miteinander verwirklicht.

Vorzugsweise bilden der außenliegende kreisringförmige Teilbereich des ersten Bereichs und der kreisförmige zentrale zweite Bereich jeweils eine plane Fläche, die in einem Winkel zwischen 80° und 100°, insbesondere 90°, zu der umlaufenden Fläche des Gehäusebechermantels steht.

Der Übergang zwischen den Ebenen des außenliegenden kreisringförmigen Teilbereichs und des kreisförmigen zentralen zweiten Bereichs kann in bevorzugten Ausgestaltungen gemäß einem der folgenden zusätzlichen Merkmale ausgebildet sein:
a. Der innenliegende kreisringförmige Teilbereich bildet eine Stufe zwischen den Ebenen des außenliegenden kreisringförmigen Teilbereichs und des kreisförmigen zentralen zweiten Bereichs.
b. Der innenliegende kreisringförmige Teilbereich bildet einen kontinuierlichen Übergang zwischen den Ebenen des außenliegenden kreisringförmigen Teilbereichs und des kreisförmigen zentralen zweiten Bereichs.

Der kreisförmige zentrale zweite Bereich bildet im Zentrum des Becherbodens von außen betrachtet beispielsweise eine stiftförmige Vorwölbung, die als Anschlusspol der Zelle dienen kann. Hierdurch kann beispielsweise der Pluspol der Zelle gebildet werden.

Die diesen Anschlusspol umgebenden kreisringförmigen Teilbereiche des Becherbodens können gemäß dem vorgenannten Merkmal a. zwei Stufen ausbilden, deren Übergänge direkt stufenförmig oder etwas abgeschrägt ausgebildet sein können.

Alternativ kann der innenliegende kreisringförmige Teilbereich eine hohlkegelstumpfartige, schräge Form aufweisen und so gemäß dem vorgenannten Merkmal b. einen kontinuierlichen Übergang bilden.

Besonders bevorzugt ist die Ausgestaltung der Energiespeicherzelle gemäß dem vorgenannten Merkmal a. mit einem stufenförmigen Profil. Dabei sind die kreisringförmigen Teilbereiche des ersten Bereichs in zwei Ebenen in dem Becherboden vorgesehen, die den hervorstehenden Anschlusspol, also den kreisförmigen zentralen zweiten Bereich, umgeben. Besonders bevorzugt ist es hierbei, wenn diese Ebenen plane Bereiche aufweisen, die in einem Winkel von 90° ± 10° zu dem Gehäusemantel stehen. Dabei schließt der außenliegende kreisringförmige Teilbereich und vorzugsweise auch der innenliegende kreisringförmige Teilbereich mit dem Gehäusebechermantel einen Winkel von etwa 90° ein.

In besonders bevorzugten Ausgestaltungen befindet sich die hohlzylinderförmige (ringförmige) äußere Elektrode ausschließlich in dem Bereich des außenliegenden kreisringförmigen Teilbereichs des Becherbodens und sitzt dabei vorzugsweise auf dieser äußeren Stufe des Becherbodens auf.

Dieses Becherbodenprofil kann in bevorzugten Ausführungsbeispielen für handelsübliche Abmessungen von Energiespeicherelementen ausgebildet sein. Beispielsweise kann es sich bei der erfindungsgemäßen Energiespeicherzelle um eine Zelle mit der Batteriegröße LR6 handeln. Der äußere Durchmesser des außenliegenden kreisringförmigen Teilbereichs kann beispielsweise in einem Bereich von 13,6 bis 14,4 mm liegen, vorzugsweise 13,7 bis 14,0 mm, insbesondere 13,8 mm. Dieser äußere Durchmesser des außenliegenden kreisförmigen Teilbereichs bildet dabei auch in etwa den Außenumfang des Gehäuses im Bereich der umlaufenden Mantelfläche der Zelle.

Weiterhin kann der äußere Durchmesser des innenliegenden kreisringförmigen Teilbereichs des ersten Bereichs des Becherbodens beispielsweise in einem Bereich von 8 bis 10 mm liegen, bevorzugt beispielsweise 9,2 mm.

Der äußere Durchmesser des kreisförmigen zentralen zweiten Bereichs, der vorzugsweise den Anschlusspol der Zelle auf dieser Seite der Zelle bildet, kann beispielsweise in einem Bereich von 4 bis 5,5 mm liegen, insbesondere 5,0 mm.

Das Profil des Becherbodens kann beispielsweise im Zuge eines Tiefziehprozess bei der Produktion des Gehäusebechers hergestellt werden.

In einer bevorzugten Ausführungsform der erfindungsgemäßen Energiespeicherzelle zeichnet sich die Energiespeicherzelle durch das unmittelbar folgende zusätzliche Merkmale a. aus:
a. Die mindestens eine Kerbe befindet sich in dem innenliegenden kreisringförmigen Teilbereich des ersten Bereichs des Becherbodens.

In einer alternativen, ganz besonders bevorzugten Ausführungsform der erfindungsgemäßen Energiespeicherzelle zeichnet sich die Zelle durch das unmittelbar folgende zusätzliche Merkmal a. aus:
a. Die mindestens eine Kerbe befindet sich in dem außenliegenden kreisringförmigen Teilbereich des ersten Bereichs des Becherbodens.

Durch die Anordnung der mindestens einen Kerbe in dem außenliegenden kreisringförmigen Teilbereich des Becherbodens gemäß dem vorgenannten Merkmal a. wird erreicht, dass sich die Sollrissstelle in dem Bereich des Becherbodens befindet, der an die außenliegende hohlzylinderförmige bzw. ringförmige Elektrode angrenzt. Bei dieser ringförmigen Elektrode handelt es sich in der Regel um eine aus porösem Material gebildete Elektrode, so dass die aus dem Inneren der Zelle austretenden Gase und gegebenenfalls Flüssigkeiten im Berstfall zumindest zu weiten Teilen dieses poröse Material durchtreten müssen, bevor sie aus der Sollrissstelle austreten können. Hierdurch werden partikuläre Bestandteile zurückgehalten und es kommt nicht zu einem unkontrollierten Herausspritzen von Materialien aus der Sollrissstelle, so dass dieses unkontrollierte Herausspritzen als mögliche Gefahrenquelle für einen Anwender in dieser Ausführungsform in besonders zuverlässiger Weise vermieden wird.

In einer besonders bevorzugten Ausgestaltung der erfindungsgemäßen Energiespeicherzelle zeichnet sich die Zelle durch mindestens eines der folgenden zusätzlichen Merkmale aus:
a. Die Kerbe findet sich auf der nach außen gerichteten Seite des Becherbodens;
b. Die Kerbe ist nach außen hin nicht von einem metallischen Element bedeckt.

Vorzugsweise sind die vorgenannten Merkmale a. und b. in Kombination miteinander realisiert.

Erfindungsgemäß kann ein unkontrolliertes Austreten von Flüssigkeiten und gegebenenfalls festen oder partikulären Bestandteilen im Berstfall zuverlässig vermieden wird, ohne dass dafür ein zusätzliches Bauteil notwendig wäre. Insbesondere ist keine aufgeschweißte Abschlusskappe, beispielsweise kein aufgeschweißter Anschlusspol, im Bereich des Becherbodens erforderlich.

Weiterhin zeichnet sich die erfindungsgemäße Energiespeicherzelle bevorzugt dadurch aus, dass sie keine Filter- oder Lochscheiben oder ähnliche Bauteile im Inneren der Zelle aufweist. In der Literatur, z.B. in der WO 2020/033090 A1, wurden bereits Energiespeicherzellen vorgeschlagen, die mit Filter- oder Lochscheiben ausgestattet sind, die ein unkontrolliertes Herausspritzen insbesondere von partikulären Bestandteilen aus dem Inneren der Zelle im Berstfall vermeiden sollen. Derartige Filter- oder Lochscheiben sind bei den erfindungsgemäßen Energiespeicherzellen nicht erforderlich.

In ganz besonders bevorzugten Ausgestaltungen der erfindungsgemäßen Energiespeicherzelle im Hinblick auf die Geometrie der mindestens einen Kerbe zeichnet sich die Kerbe durch mindestens eines der unmittelbar folgenden zusätzlichen Merkmale a. bis c. aus:
a. Die Kerbe ist zumindest abschnittsweise als Gerade ausgebildet;
b. Die Länge der Kerbe beträgt maximal die Hälfte des Durchmessers des Becherbodens;
c. Die Länge der Kerbe ist größer als die Breite des innenliegenden und/oder des außenliegenden kreisringförmigen Teilbereichs.

Vorzugsweise sind die vorgenannten Merkmale a. und b., oder a. und c., oder b. und c., oder, ganz besonders bevorzugt, die vorgenannten Merkmale a. bis c. in Kombination miteinander verwirklicht.

Es kann weiterhin bevorzugt sein, dass die Länge der Kerbe größer als der Durchmesser des kreisförmigen zentralen zweiten Bereichs ist.

In besonders bevorzugter Weise ist eine einzige Kerbe im Becherboden der Zelle vorgesehen.

Durch die Ausbildung der Kerbe als Gerade, oder zumindest abschnittsweise als Gerade, wird vermieden, dass sich im Umfeld der geöffneten Sollrissstelle Teile des Becherbodens aufbiegen können, wie es beispielsweise bei einer teilkreisförmigen Sollrissstelle der Fall wäre. Hierdurch würde sich die Öffnung deutlich vergrößern, so dass Material aus dem Inneren der Zelle unkontrolliert austreten könnte. Dies tritt bei der Kerbe gemäß der Erfindung nicht auf. Durch die Ausbildung der Kerbe als Gerade, insbesondere vollständig als Gerade, d.h. also in streng linearer Form, wird in besonders zweckmäßiger Weise erreicht, dass ein Aufbiegen von Teilen des Becherbodens vermieden wird, so dass es nicht zu einer vergrößerten Öffnung kommt, durch die Material relativ ungehindert austreten könnte. Insgesamt bewirkt die gerade und lineare Ausbildung der Kerbe, dass beim Erreichen des Berstdrucks nur eine schmale Öffnung entsteht, die sich bei einem späteren Abfallen des Innendrucks in der Zelle durch die Spannung des umliegenden Metalls sogar teilweise wieder verschließen kann. Bei herkömmlichen Lösungen mit halbkreis-, sichel- oder sternförmigen Sollbruchstellen entstehen beim Öffnen hingegen durch das Aufklappen des Wandmaterials große Öffnungen, durch die flüssige und feste Batteriebestandteile explosionsartig austreten können. Bei solchen herkömmlichen Lösungen ist daher ein zusätzlicher Schutz vor austretendem Material, beispielswese durch eine aufgeschweißte Scheibe oder ein Filterelement, erforderlich.

In einigen Ausführungsformen kann es bevorzugt sein, dass die mindestens eine Kerbe, vorzugsweise die einzige Kerbe, im Becherboden außerhalb des Zentrums des Becherbodens liegt, so dass sie also asymmetrisch bzw. off-center liegt.

Die Länge der Kerbe kann beispielsweise 5 bis 7 mm, beispielsweise 6 mm, betragen, insbesondere bei einer Zelle, deren Gehäuse einen Durchmesser von etwa 13 bis 15 mm aufweist.

Im Hinblick auf die Geometrie der mindestens einen Kerbe und bevorzugt der einzigen Kerbe in dem Becherboden zeichnet sich die erfindungsgemäße Energiespeicherzelle vorzugsweise durch eines der unmittelbar folgenden zusätzlichen Merkmale a. und b. aus:
a. Der Becherboden weist die mindestens eine Kerbe in dem innenliegenden kreisringförmigen Teilbereich auf, wobei die Kerbe zumindest abschnittsweise als Gerade ausgebildet ist, und die als Gerade ausgebildete Kerbe oder deren als Gerade ausgebildeter Abschnitt ist derart ausgerichtet, dass sie/er auch extrapoliert den kreisförmigen zentralen zweiten Bereich nicht schneidet.
b. Der Becherboden weist die mindestens eine Kerbe in dem außenliegenden kreisringförmigen Teilbereich auf, wobei die Kerbe zumindest abschnittsweise als Gerade ausgebildet ist, und die als Gerade ausgebildete Kerbe oder deren als Gerade ausgebildeter Abschnitt ist derart ausgerichtet, dass sie/er auch extrapoliert den innenliegenden kreisringförmigen Teilbereich nicht schneidet.

Hierbei sind die vorgenannten Merkmale a. und b. als Alternativen zu verstehen.

Besonders bevorzugt ist die Alternative gemäß dem vorgenannten Merkmal b., wonach sich die mindestens eine Kerbe und vorzugsweise genau eine Kerbe in dem äußeren kreisringförmigen Teilbereich des Becherbodens befindet. In dieser Ausführungsform befindet sich die durch die Kerbe gebildete Sollrissstelle im Bereich der äußeren kreisringförmigen Elektrode, so dass das unter Druck stehende Material aus dem Inneren der Zelle das poröse Material der äußeren kreisringförmigen Elektrode zumindest abschnittsweise durchdringen muss. Dabei wird insbesondere partikuläres Material zurückgehalten. Zusätzlich wird das Austreten von Gasen und/oder Flüssigkeiten durch das poröse Material der äußeren Elektrode gebremst.

In einer ganz besonders bevorzugten Ausgestaltung der erfindungsgemäßen Energiespeicherzelle zeichnet sich die Energiespeicherzelle weiter durch mindestens eines der unmittelbar folgenden zusätzlichen Merkmale a. bis c. aus:
a. Die Kerbe ist von einer auf der Außenseite des Gehäuses angeordneten Kunststofffolie abgedeckt;
b. Die Kunststofffolie ist auf den Gehäusebechermantel aufgebracht und deckt darüber hinaus zumindest teilweise den kreisringförmigen ersten Bereich, insbesondere den außenliegenden kreisringförmigen Teilbereich des ersten Bereichs, des Becherbodens ab;
c. Die Kunststofffolie ist ein Energiespeicherzellenetikett.

In besonders bevorzugter Weise sind die vorgenannten Merkmale a. und b. und, ganz besonders bevorzugt, die vorgenannten Merkmale a, b und c in Kombination miteinander verwirklicht.

Es ist besonders vorteilhaft, wenn sich die mindestens eine Kerbe und insbesondere die genau eine Kerbe in dem außenliegenden kreisringförmigen Teilbereich des ersten Bereichs des Becherbodens befindet, so dass die Kunststofffolie die Kerbe dementsprechend überdecken kann. Durch die die Sollrissstelle überdeckende Kunststofffolie wird das unkontrollierte Austreten von gasförmigen oder flüssigen Bestandteilen der Zelle weiter gehemmt. Insbesondere in Kombination mit der Anordnung der Kerbe im außenliegenden kreisringförmigen Teilbereich des Becherbodens, also im Bereich der hohlzylinderförmigen außenliegenden Elektrode, wird damit ein ganz besonders zuverlässiger Schutz bei besagtem Austreten von Materialien erreicht.

Bei der Kunststofffolie kann es sich insbesondere um eine mehrlagige Folie handeln, beispielsweise eine mehrlagige Folie mit einer Gesamtdicke von 40 bis 80 µm, beispielsweise 55 µm. Geeignete Materialien hierfür sind insbesondere PET (Polyethylenterephthalat) oder PVC (Polyvinylchlorid) oder PE (Polyethylen). Derartige Materialien sind für die Aufbringung von Batterieetiketten auf derartigen Energiespeicherzellen bereits bekannt.

Im Zusammenhang mit der erfindungsgemäßen Energiespeicherzelle haben derartige Kunststofffolien den besonderen Vorteil, dass die Folie zwar durch mit Druck austretende Gase oder Flüssigkeiten beiseite gedrückt werden kann, dem Material aber so viel Widerstand entgegenbringt, dass die Austrittsgeschwindigkeit reduziert wird.

Ein Kunststoffmaterial als Energiespeicherzellenetikett auf dem Gehäusebechermantel hat den weiteren besonderen Vorteil, dass es zusätzlich auch elektrisch isolierend wirkt.

Wie oben erläutert, zeichnet sich der Becherboden der Zelle vorzugsweise durch einen mehrstufigen Querschnitt aus, wobei die Kerbe vorzugsweise in der äußeren Stufe des profilierten Gehäusebodens angebracht ist.

Insbesondere die äußere Stufe des entsprechend profilierten Gehäusebodens ist vorzugsweise durch die Kunststofffolie abgedeckt. Vorzugsweise ist ausschließlich die äußere Stufe des Becherbodens von der Kunststofffolie abgedeckt.

Bei der Fertigung der Zelle kann die Kunststofffolie beispielsweise in Form eines Schlauchs aufgebracht und aufgeschrumpft werden. Vorteilhaft hierbei ist es, wenn die Kunststofffolie bei diesem Prozess derart aufgebracht wird, dass sie an ihren Rändern die Kerbe im Becherboden der Zelle abdeckt.

Im Hinblick auf die weitere besonders bevorzugte Geometrie der mindestens einen Kerbe im Becherboden der Zelle zeichnet sich die Energiespeicherzelle in besonders bevorzugten Ausführungsbeispielen durch mindestens eines der unmittelbar folgenden zusätzlichen Merkmale a. bis c. aus:
a. Die Kerbe weist einen trapezförmigen Querschnitt mit zwei Wandseiten und einem Boden und einer offenen Seite auf;
b. Die Kerbe weitet sich ausgehend von dem Boden auf;
c. Die zwei Wandseiten schließen einen Winkel im Bereich von 50 bis 80°, vorzugsweise im Bereich von 53 bis 57°, ein.

Vorzugsweise sind die vorgenannten Merkmale a. und b., oder a. und c., oder b. und c., oder, besonders bevorzugt, die vorgenannten Merkmale a. bis c. in Kombination miteinander verwirklicht.

Diese besonders bevorzugte Geometrie der Kerbe im Hinblick auf deren Querschnitt und Öffnungswinkel sorgt in besonders zuverlässiger Weise dafür, dass im Bestfall kein unkontrolliertes Austreten von Material aus dem Inneren der Zelle auftritt.

In besonders bevorzugten Ausführungsformen weist die Kerbe den trapezförmigen Querschnitt gemäß dem vorgenannten Merkmal a. auf, wobei die zwei Wandseiten einen Öffnungswinkel von 55° umschließen.

Im Hinblick auf die Geometrie der mindestens einen Kerbe der erfindungsgemäßen Energiespeicherzelle zeichnet sich die Zelle in bevorzugter Weise weiter durch mindestens eines der folgenden zusätzlichen Merkmale aus:
a. Die Wandstärke des Becherbodens ist im Bereich des Bodens der Kerbe um 60 bis 90 %, vorzugsweise um 70 bis 80 %, gegenüber der Wandstärke des Becherbodens in der unmittelbaren Umgebung der Kerbe reduziert;
b. Der Becherboden weist in der unmittelbaren Umgebung der Kerbe, also außerhalb des Bereichs des Bodens der Kerbe, eine Wandstärke von 0,15 bis 0,30 mm, vorzugsweise von 0,20 bis 0,25 mm, auf;
c. Der Becherboden weist im Bereich des Bodens der Kerbe eine Wandstärke von 0,03 bis 0,09 mm, vorzugsweise von 0,04 bis 0,08 mm, besonders bevorzugt von 0,05 bis 0,07 mm, auf.

In besonders bevorzugten Ausführungsformen der erfindungsgemäßen Energiespeicherzelle zeichnet sich die Zelle insbesondere durch eine Kombination der vorgenannten Merkmale a. und b., und, ganz besonders bevorzugt, durch eine Kombination der vorgenannten Merkmale a. bis c. aus.

Die verbleibende Wandstärke im Bereich des Bodens der Kerbe kann in besonders bevorzugten Ausführungsbeispielen insbesondere im Bereich von 20 % bis 30 % der übrigen Wandstärke des Becherbodens in der unmittelbaren Umgebung der Kerbe liegen, beispielsweise kann die verbleibende Wandstärke 21 % oder 22 % oder 29 % oder 30 % der übrigen Wandstärke des Becherbodens betragen.

Die Wandstärke des Becherbodens außerhalb der Kerbe kann beispielsweise im Bereich von 0,23 bis 0,24 mm liegen.

Die Wandstärke im Bereich des zylindrischen Gehäusemantels kann für die Baugröße LR6 beispielsweise in einem Bereich von 0,14 bis 0,18 mm liegen.

In bevorzugten Ausführungsbeispielen beträgt die Wandstärke (Restwandstärke) im Bereich des Bodens der Kerbe 0,05 mm oder 0,07 mm.

Versuche der Erfinder haben gezeigt, dass bei einer asymmetrisch im Becherboden angebrachten Kerbe mit dieser beschriebenen Geometrie im Berstfall relativ wenig Elektrolyt austritt. Weiterhin kommt es nicht zu einem Austritt von festen Bestandteilen der Zelle. Insbesondere im Vergleich mit anderen Zellen, die eine beispielsweise bogenförmige Sollrissstelle im Becherboden aufweisen, bei der sich im Berstfall ein Teil des Gehäuses aufbiegt, wird wesentlich weniger Material bei der erfindungsgemäßen Zelle freigesetzt. Bei der Kerbe der erfindungsgemäßen Zelle findet gewissermaßen eine sanfte Öffnung statt und es tritt nur wenig Material in kontrollierter Weise aus.

In weiteren bevorzugten Ausgestaltungen der erfindungsgemäßen Energiespeicherzelle zeichnet sich die Zelle durch das unmittelbar folgende zusätzliche Merkmal a. aus:
a. Die Wandstärke des Becherbodens beträgt im Bereich des Bodens der Kerbe das Ein- bis Vierfache des Abstands der Wandseiten am Boden der Kerbe.

Der Abstand der Wandseiten am Boden der Kerbe entspricht dabei der Breite der Kerbe an ihrem Boden. Vorzugsweise handelt es sich hierbei um die schmalste Stelle der Kerbe.

In besonders bevorzugten Ausführungsbeispielen der erfindungsgemäßen Energiespeicherzelle beträgt die Wandstärke des Becherbodens im Bereich des Bodens der Kerbe beispielsweise das 2,5-fache oder das 3,5-fache des Abstands der Wandseiten am Boden der Kerbe.

In besonders bevorzugten Ausgestaltungen zeichnet sich die erfindungsgemäße Energiespeicherzelle weiterhin durch mindestens eines der unmittelbar folgenden zusätzlichen Merkmale a. und b. aus:
a. Der Abstand der Wandseiten am Boden der Kerbe beträgt 5 bis 30 %, vorzugsweise 8 bis 15 %, der Wandstärke des Becherbodens in der unmittelbaren Umgebung der Kerbe;
b. Der Abstand der Wandseiten am Boden der Kerbe liegt in einem Bereich von 0,01 bis 0,08 mm, vorzugsweise von 0,02 bis 0,07 mm, besonders bevorzugt in einem Bereich von 0,02 mm bis 0,03 mm.

Vorzugsweise sind die beiden vorgenannten Merkmale a. und b. in Kombination miteinander realisiert.

In besonders bevorzugten Ausführungsbeispielen beträgt der Abstand der Wandseiten am Boden der Kerbe zwischen 8 und 15 %, vorzugsweise zwischen 11 und 13 % der Wandstärke des Becherbodens in der unmittelbaren Umgebung der Kerbe.

Der Abstand der Wandseiten am Boden der Kerbe beträgt in besonders bevorzugten Ausführungsbeispielen 0,02 mm bis 0,03 mm.

In besonders bevorzugten Ausführungsbeispielen zeichnet sich die erfindungsgemäße Energiespeicherzelle durch das unmittelbar folgende zusätzliche Merkmal a. aus:
a. Die mindestens eine Kerbe der elektrochemischen Energiespeicherzelle ist derart ausgebildet, dass der Becherboden bei einem Druck einem Bereich von 40 bis 105 bar entlang der Kerbe aufreißt.

In bevorzugten Ausführungsbeispielen liegt der Öffnungsdruck beispielsweise in einem Bereich zwischen 40 und 90 bar oder in einem Bereich zwischen 55 und 105 bar.

Durch die Anordnung und Geometrie der Kerbe gemäß der Erfindung kann der Öffnungsdruck sehr präzise und angepasst an die jeweilige Anwendung eingestellt werden. Insbesondere durch die Anpassung der Restwandstärke im Bereich des Bodens der Kerbe kann der Öffnungsdruck eingestellt werden. Wenn beispielsweise die Restwandstärke von 0,05 mm auf 0,07 mm erhöht wird, ist der Druck, bei dem sich die Sollrissstelle öffnet, größer.

Bei einem besonders bevorzugten Ausführungsbeispiel einer erfindungsgemäßen Energiespeicherzelle der Baugröße LR6 weist die Kerbe im Becherboden der Energiespeicherzelle insbesondere einen Öffnungswinkel von 55° auf, wobei die untere Breite der Kerbe 0,02 mm beträgt. Die Wandstärke des Becherbodens außerhalb der Kerbe beträgt vorzugsweise 0,23 bis 0,24 mm, wobei die Wandstärke (Restwandstärke) im Bodenbereich der Kerbe vorzugsweise 0,05 mm beträgt. Diese Kerbe ist als Sollrissstelle insbesondere für einen Öffnungsdruck von 40 bis 90 bar ausgelegt. Die Kerbe gemäß diesem Ausführungsbeispiel liegt vorzugsweise im innenliegenden kreisringförmigen Teilbereich des ersten Bereichs des Becherbodens. Die Kerbe kann jedoch auch im außenliegenden kreisringförmigen Teilbereich des ersten Bereichs des Becherbodens liegen.

In einem weiteren bevorzugten Ausführungsbeispiel der Baugröße LR6 beträgt der Öffnungswinkel der Kerbe im Boden der Energiespeicherzelle ebenfalls 55° und die Breite der Kerbe an deren Boden beträgt 0,02 mm. Die Wandstärke des Becherbodens außerhalb der Kerbe beträgt 0,23 bis 0,24 mm, wobei die Wandstärke im Bodenbereich der Kerbe 0,07 mm beträgt. Diese Kerbe ist als Sollrissstelle insbesondere für einen Öffnungsdruck von 55 bis 105 bar ausgelegt. Die Kerbe gemäß diesem Ausführungsbeispiel liegt vorzugsweise im außenliegenden kreisringförmigen Teilbereich des ersten Bereichs des Becherbodens.

Bevorzugterweise zeichnet sich die erfindungsgemäße Energiespeicherzelle durch mindestens eines der folgenden zusätzlichen Merkmale aus:
a. Die positive Elektrode ist eine Manganoxid-Elektrode;
b. Die negative Elektrode ist eine Zinkelektrode;
c. Zwischen der positiven Elektrode und der negativen Elektrode ist ein Separator angeordnet;
d. Die Energiespeicherzelle umfasst einen alkalischen Elektrolyten.

In bevorzugten Ausführungsbeispielen sind die vorgenannten Merkmale a. und b. in Kombination miteinander verwirklicht. In besonders bevorzugter Weise sind die vorgenannten Merkmale a. bis d. in Kombination miteinander verwirklicht.

In der Ausführungsform gemäß den vorgenannten Merkmalen a. bis d. handelt es sich bei der erfindungsgemäßen Energiespeicherzelle um eine Alkali-Mangan-Zelle.

Als alkalischer Elektrolyt kann insbesondere Kalilauge, also eine wässrige Lösung von Kaliumhydroxid, eingesetzt werden.

Bei Alkali-Mangan-Zellen liegt die positive Elektrode als ringförmige Kathode außen und die negative Elektrode als Anode innen. Die Anode kann dabei beispielsweise von einem Zinkpulver-Gel gebildet werden, wobei die aktive Zinkmasse beispielsweise in Form eines Zinklegierungspulvers mit dem alkalischen Elektrolyten und einem Geliermittel vermischt wird. Die positive Elektrode besteht insbesondere aus gepresstem Mangandioxid (Braunstein).

Das metallische Gehäuse wird von einem Metallbecher und einer Metallplatte als Deckel gebildet. In einer einfachen Ausgestaltung kann dabei die positive Elektrode beispielsweise von einer inneren Beschichtung des metallischen Gehäusebechers mit Mangandioxid gebildet sein. In anderen Ausgestaltungen kann zur Ausbildung der Kathode die hohlzylinderförmige Kathode aus ringförmigen Einzelsegmenten zusammengesetzt sein, die an ihren Kontaktflächen flächig aneinandergrenzen.

Derartige Alkali-Mangan-Zellen stellen im Hinblick auf geeignete Sicherungsfunktionen besondere Anforderungen. Typischerweise liegen die Berstdrücke von handelsüblichen Alkali-Mangan-Zellen vom Typ LR6 beispielsweise in einem Bereich von 60 bar. Beim Öffnen einer Berstmembran in dem Gehäusebecher einer solchen Zelle besteht daher die potenzielle Gefahr, dass Elektrolyt und insbesondere Teile der negativen Elektrode mit relativ hoher Geschwindigkeit unkontrolliert austreten. Daher werden bisherige handelsübliche Alkali-Mangan-Zellen in der Regel mit einer Berstmembran in der Kunststoffdichtung ausgestattet, die die Deckelplatte gegenüber dem Rand des Gehäusebechers abdichtet. Diese übliche Ausführungsform einer Berstfunktion in einer Alkali-Mangan-Batterie mit den damit verbundenen Nachteilen wurde bereits eingangs erläutert.

Demgegenüber konnten die Erfinder zeigen, dass mit mindestens einer Kerbe gemäß der erfindungsgemäßen Ausgestaltung dieser Kerbe im Gehäuseboden eine zuverlässige Berstfunktion für eine Alkali-Mangan-Zelle realisiert werden kann, die den Sicherheitsanforderungen genügt. Insbesondere kann mit einer solchen Kerbe zum einen eine Sollrissstelle bereitgestellt werden, die zuverlässig bei dem vorgesehenen Öffnungsdruck aufreißt und zur Druckentlastung dient. Gleichzeitig wird durch die erfindungsgemäße Ausgestaltung der Kerbe ein unkontrolliertes Heraustreten und Herausspritzen von flüssigen und gegebenenfalls festen Bestandteilen aus dem Inneren der Energiespeicherzelle vermieden, so dass keine weiteren Vorkehrungen gegen ein solches unkontrolliertes Herausspritzen bei der erfindungsgemäßen Energiespeicherzelle erforderlich sind, wie beispielsweise eine aufgeschweißte metallische Abdeckkappe oder eine im Inneren der Zelle vorgesehene Filterscheibe oder Vergleichbares.

Der Gehäusebecher für das Gehäuse der erfindungsgemäßen Energiespeicherzelle kann beispielsweise als Tiefziehteil ausgebildet werden und kann beispielsweise aus vernickeltem Stahl bestehen. Die mindestens eine Kerbe gemäß dem erfindungsgemäßen Konzept kann beispielsweise in dem Tiefziehprozess erzeugt werden. In anderen Ausbildungen kann die mindestens eine Kerbe beispielsweise auch auf den Becherboden aufgeprägt werden.

In einer besonders bevorzugten Ausführungsform der erfindungsgemäßen Energiespeicherzelle ist in dem Becherboden der als Alkali-Mangan-Zelle ausgebildeten Zelle eine einzelne Kerbe vorgesehen. Die Kerbe liegt azentrisch und erstreckt sich nicht durch die Mitte des Becherbodens. Die Kerbe ist streng linear und weist eine Länge auf, die weniger als 50 % des Durchmessers des Becherbodens entspricht. Dabei liegt die Kerbe im äußeren Bereich des Becherbodens, ist nach außen offen und weist einen trapezförmigen Querschnitt auf, der sich nach außen weitet. Die Kerbe wird nicht von einem metallischen Element bedeckt. Vorzugsweise ist die Kerbe von einer Kunststofffolie bedeckt, die beispielsweise ein Etikett bildet, das auf dem Gehäusemantel der Zelle aufgebracht ist.

Weitere Merkmale der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Figuren zeigen:
- Fig. 1: Längsschnitt durch eine erfindungsgemäße Energiespeicherzelle;
- Fig. 2: Längsschnitt durch den Gehäusebecher einer erfindungsgemäßen Energiespeicherzelle im Bereich des Gehäusebodens;
- Fig. 3: Längsschnitt durch den Gehäusebecher einer weiteren Ausführungsform einer erfindungsgemäßen Energiespeicherzelle im Bereich des Gehäusebodens;
- Fig. 4: Aufsicht auf den Gehäuseboden einer erfindungsgemäßen Energiespeicherzelle;
- Fig. 5: Ansicht schräg von unten auf den Gehäuseboden der erfindungsgemäßen Energiespeicherzelle aus Fig. 4;
- Fig. 6: Aufsicht auf den Gehäuseboden einer weiteren Ausführungsform einer erfindungsgemäßen Energiespeicherzelle;
- Fig. 7: Ansicht schräg von unten auf den Gehäuseboden der erfindungsgemäßen Energiespeicherzelle aus Fig. 6; und
- Fig. 8: Schnittdarstellung des Gehäusebodens einer erfindungsgemäßen Energiespeicherzelle im Bereich einer Kerbe.

### BESCHREIBUNG BEVORZUGTER AUSFÜHRUNGSBEISPIELE

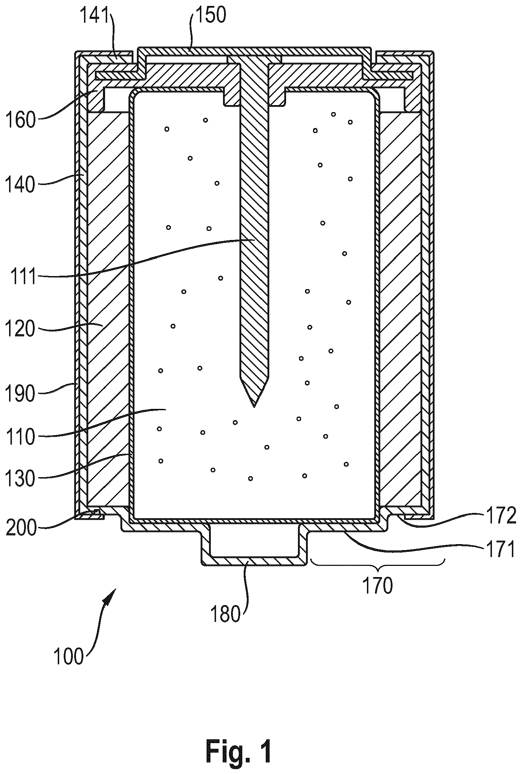

**Fig. 1** zeigt in einem Längsschnitt eine erfindungsgemäße, zylindrische Energiespeicherzelle 100, die als Alkali-Mangan-Zelle ausgebildet ist. Die Energiespeicherzelle 100 umfasst eine negative Zinkelektrode 110, die von einer hohlzylindrischen positiven Elektrode 120 umgeben ist. Die hohlzylinderförmige Elektrode 120 besteht im Wesentlichen aus Manganoxid. Im Zentrum der inneren Elektrode 110 befindet sich ein stiftförmiger, metallischer Stromableiter 111. Zwischen der inneren, negativen Elektrode 110 und der hohlzylinderförmigen, positiven Elektrode 120 ist ein Separator 130 angeordnet, der die Elektroden voneinander trennt und dabei für Ionen durchlässig ist.

Die Kathode 120 kann insbesondere aus gepresstem Manganoxid (Braunstein) gebildet sein. Die Kathode kann dabei innerhalb der Energiespeicherzelle 100 einen Ring bildet, der in direktem elektrischem Kontakt mit dem metallischen Gehäusebecher 140 steht. Die Anode 110 wird vorzugsweise aus einer Paste aus Zinkpulver und Kaliumhydroxid als Elektrolyt gebildet. Diese Paste kann beispielsweise in ein ionendurchlässiges Filterpapier oder in eine entsprechende Folie als Separator 130 eingefügt sein.

Die Elektroden 110, 120 befinden sich innerhalb eines metallischen Gehäuses, das von einem Gehäusebecher 140 und einem Gehäusedeckel 150 gebildet ist. Der Gehäusedeckel 150 wird mittels eines umgebogenen Rands 141 des Gehäusebechers 140 gehalten und ist über eine Kunststoffdichtung 160 gegenüber dem Gehäusebecher 140 und gegenüber einem direkten Kontakt mit der inneren Elektrode 110 und der hohlzylinderförmigen äußeren Elektrode 120 isoliert. Der stiftförmige Stromableiter 111 durchdringt die Kunststoffdichtung 160 und steht in direktem, elektrisch leitenden Kontakt mit dem Gehäusedeckel 150.

Auf der gegenüberliegenden Seite der Energiespeicherzelle 100 befindet sich der Gehäuseboden des Gehäusebechers 140, der einen kreisringförmigen ersten Bereich 170 und einen kreisförmigen zentralen zweiten Bereich 180 umfasst. Der kreisringförmige erste Bereich 170 ist in einen innenliegenden kreisringförmigen Teilbereich 171 und in einen außenliegenden kreisringförmigen Teilbereich 172 untergliedert. Die Übergänge zwischen den einzelnen Teilbereichen bzw. Ebenen des Becherbodens sind als Stufen ausgebildet, gegebenenfalls mit Radien oder abgeschrägten Übergängen. Die hohlzylinderförmige äußere Elektrode 120 sitzt auf dem außenliegenden kreisringförmigen Teilbereich 172 des Becherbodens auf und schließt praktisch mit dieser Stufe des Becherbodens ab.

Der kreisförmige zentrale zweite Bereich 180 bildet den tiefsten Bereich des Becherbodens und einen Anschlusspol der Energiespeicherzelle 100, in diesem Fall den positiven Anschlusspol. Der Deckel 150 auf der gegenüberliegenden Seite der Energiespeicherzelle 100 bildet demgemäß den negativen Pol. In anderen Ausführungsformen kann es auch vorgesehen sein, dass die innere Elektrode eine positive Polarität und die äußere, ringförmige Elektrode eine negative Polarität aufweist, so dass insgesamt die Polarität einer solchen Energiespeicherzelle umgekehrt wäre.

Die zylindrische Energiespeicherzelle 100 weist einen umlaufenden Gehäusemantel auf, der mit einer darauf angebrachten Kunststofffolie 190 versehen ist. Die Kunststofffolie 190 dient als Zellenetikett und kann mit verschiedenen Informationen in schriftlicher und/oder bildlicher Form versehen sein. Weiterhin übt die Kunststofffolie 190 eine isolierende Funktion aus.

Erfindungsgemäß ist die Energiespeicherzelle 100 mit einer Kerbe 200 ausgestattet. Die Kerbe 200 ist im ersten Bereich 170 des Becherbodens angebracht. In dem hier dargestellten Ausführungsbeispiel befindet sich die Kerbe 200 im außenliegenden kreisringförmigen Teilbereich 172. Die Kerbe 200 ist von der Kunststofffolie 190 bedeckt.

Die Kerbe 200 dient als Sollrissstelle, um bei einem sich aufbauenden Innendruck in der Energiespeicherzelle 100 einen Druckausgleich zu ermöglichen, so dass es nicht zu einer Explosion der Energiespeicherzelle 100 kommt. Die Kerbe 200 ist so ausgebildet, dass sie gewissermaßen ein sanftes Öffnen beim Aufreißen der Sollrissstelle bewirkt, so dass es nicht zu einem unkontrollierten Herausspritzen von Flüssigkeiten und gegebenenfalls festen Bestandteilen kommt, die eine Person in der unmittelbaren Umgebung der Energiespeicherzelle 100 schädigen könnten. Ein unkontrolliertes Herausspritzen wird dabei insbesondere durch die Geometrie und Anordnung der Kerbe erreicht.

Vorzugsweise ist die Kerbe zumindest abschnittsweise als Gerade ausgebildet, so dass es bei einem Öffnen der Kerbe nicht zu einem Aufbiegen von Teilen des Becherbodens kommt und somit die Öffnung nicht unkontrolliert vergrößert wird.

Weiterhin liegt in dem hier dargestellten bevorzugten Ausführungsbeispiel die Kerbe 200 im Bereich der hohlzylinderförmigen äußeren Elektrode 120, so dass Gase und Flüssigkeiten zunächst das poröse Material dieser Elektrode durchdringen müssen. Dies bewirkt, dass insbesondere partikuläre Bestandteile zurückgehalten werden und das Ausströmen von Gasen und Flüssigkeiten abgebremst wird.

Weiterhin ist die Kerbe 200 in diesem bevorzugten Ausführungsbeispiel von der äußeren Kunststofffolie 190 umgeben. Auch durch die Kunststofffolie 190 wird der Austritt von Gasen und Flüssigkeiten weiter gebremst.

In anderen Ausführungsformen kann eine solche Kerbe 200 auch in dem innenliegenden teilkreisförmigen Bereich 171 angeordnet sein.

Das Ausgangsmaterial für die Herstellung des Gehäusebechers kann beispielsweise eine Dicke von 0,25 mm aufweisen. Durch den Tiefziehprozess bei der Herstellung des Gehäusebechers kommt es im Bereich des Mantels zu einer Abstreckung des Materials, sodass die Wandstärke im Bereich des Mantels beispielsweise im Bereich von 0,14 mm bis 0,18 mm liegt. Diese Abstreckung tritt in den flachen Teilen des Becherbodens kaum auf, sodass die Wandstärke im Bereich des Becherbodens (außerhalb der Kerbe) etwa 0,23 mm oder 0,24 mm beträgt.

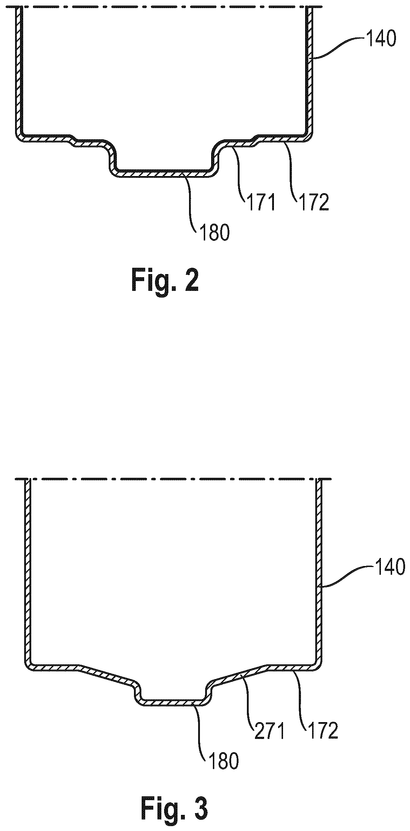

**Fig. 2** verdeutlicht das mehrstufige Profil des Becherbodens des Gehäusebechers 140 anhand einer vergrößerten Detaildarstellung. Der Becherboden zeigt dabei einen stufenförmigen Aufbau mit dem kreisförmigen zentralen Bereich 180 und dem kreisringförmigen äußeren Bereich, der in einen innenliegenden kreisringförmigen Teilbereich 171 und einen außenliegenden kreisringförmigen Teilbereich 172 untergliedert ist. Der Anschlusspol der Zelle an dieser Seite der Energiespeicherzelle wird von dem hervorstehenden zentralen Bereich 180 gebildet, der den tiefsten Bereich des Becherbodens bildet. Anders als bei älteren Vorschlägen zu im Becherboden integrierten Berstelementen (z.B. gemäß der DE 3337570 C2) wird also hier kein zusätzliches metallisches Element in Form einer Abschlusskappe auf das Gehäuse aufgeschweißt, das den jeweiligen Pol bilden würde.

Der metallische Gehäusebecher 140 mit dem stufenförmigen Gehäusebodenprofil ist bei der erfindungsgemäßen Energiespeicherzelle 100 einteilig ausgebildet. Die Fläche der ersten Stufe des Becherbodens, also der außenliegende kreisringförmige Bereich 172, bildet mit dem umlaufenden Gehäusebechermantel zumindest abschnittsweise einen rechten Winkel aus. Auch die Fläche der zweiten Stufe, also des innenliegenden kreisringförmigen Bereichs 171, und die Fläche des zentralen Bereichs 180, sind zumindest abschnittsweise rechtwinklig zu dem umlaufenden Gehäusemantel des Gehäusebechers 140 ausgerichtet.

Die Übergänge zwischen den einzelnen Ebenen bzw. Stufen des Gehäusebecherbodens sind vorzugsweise in einem rechten Winkel ausgebildet, wobei die Übergänge abgerundet und/oder abgeschrägt sein können.

Die erfindungsgemäß vorgesehene Kerbe, die hier nicht dargestellt ist, kann im Bereich des innenliegenden kreisringförmigen Teilbereichs 171 oder, besonders bevorzugt, im Bereich des außenliegenden kreisringförmigen Teilbereichs 172 liegen.

**Fig. 3** zeigt im Vergleich mit Fig. 2 eine alternative Ausgestaltung des Becherbodens eines Gehäusebechers 140. Auch hier ist ein kreisförmiger zentraler Bereich 180, ein außenliegender kreisringförmiger Teilbereich 172 und ein innenliegender kreisringförmiger Teilbereich 271 vorgesehen. Anders als der stufenförmige innenliegende kreisringförmige Teilbereich aus Fig. 2 bildet der innenliegende kreisringförmige Teilbereich 271 in dieser Ausführungsform einen kontinuierlichen, abgeschrägten Übergang zwischen den Ebenen des außenliegenden kreisringförmigen Teilbereichs 172 und des kreisförmigen zentralen Bereichs 180, der den tiefsten Bereich des Becherbodens bildet.

Die erfindungsgemäß vorgesehene Kerbe, die hier nicht dargestellt ist, kann im Bereich des innenliegenden kreisringförmigen Teilbereichs 271 oder, besonders bevorzugt, im Bereich des außenliegenden kreisringförmigen Teilbereichs 172 liegen.

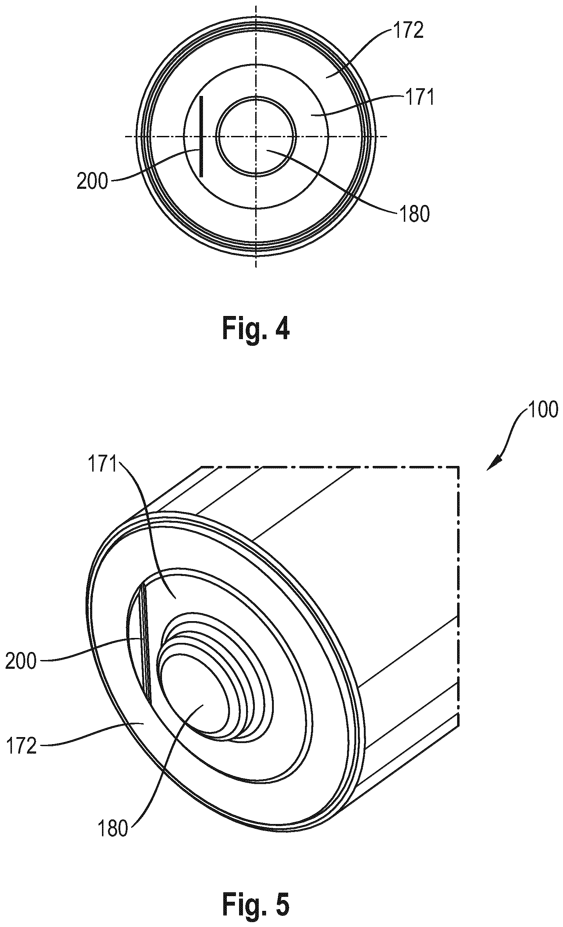

**Fig. 4** zeigt eine Aufsicht auf den Gehäuseboden mit dem kreisförmigen zentralen Bereich 180, dem innenliegenden kreisringförmigen Teilbereich 171 und dem außenliegenden kreisringförmigen Teilbereich 172. Die Kerbe 200 des Becherbodens ist in diesem Ausführungsbeispiel azentrisch in dem innenliegenden kreisringförmigen Teilbereich 171 angeordnet. Die Kerbe 200 ist in diesem Ausführungsbeispiel streng linear als Gerade ausgebildet. Die Länge der Kerbe 200 ist näherungsweise so lang wie der Durchmesser des kreisförmigen zentralen Bereichs 180.

**Fig. 5** zeigt den Becherboden der erfindungsgemäßen Energiespeicherzelle 100 aus Fig. 4 in einer Ansicht schräg von untern. Die Kerbe 200 ist in dem innenliegenden kreisringförmigen Teilbereich 171 angeordnet ist und weist einen streng linearen Verlauf auf. Die Kerbe 200 ist azentrisch angeordnet und verläuft bis zu der Grenze bzw. bis zu dem Übergang zum außenliegenden kreisringförmigen Teilbereich 172 des Becherbodens.

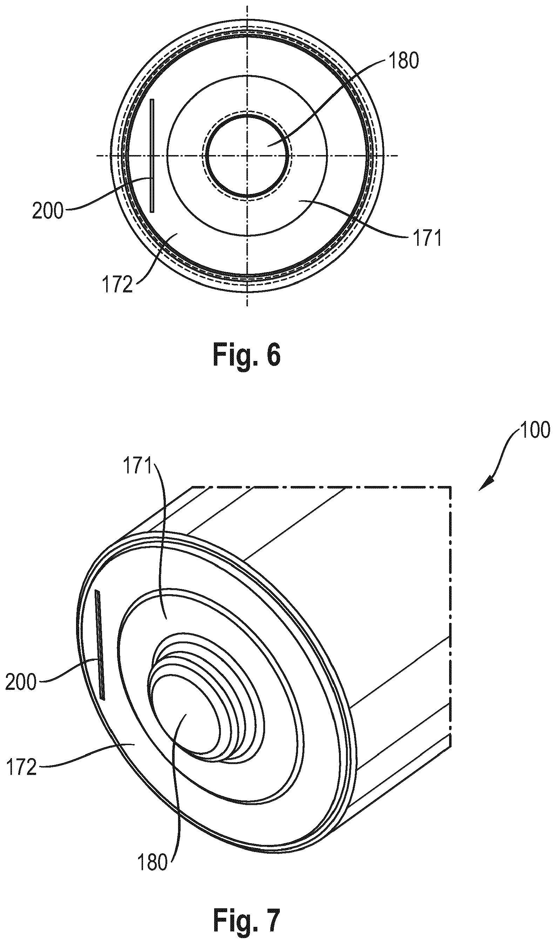

**Fig. 6** zeigt eine besonders bevorzugte Ausführungsform der erfindungsgemäßen Energiespeicherzelle 100, bei der die streng linear verlaufende Kerbe 200 in dem außenliegenden kreisringförmigen Teilbereich 172 des Becherbodens angeordnet ist.

Der besondere Vorteil dieser Anordnung der Kerbe 200 liegt insbesondere darin, dass die Kerbe 200 in dem Bereich verläuft, in dem im Inneren der Energiespeicherzelle 100 die äußere, hohlzylinderförmige Elektrode, insbesondere die Kathode, angeordnet ist. Die im Berstfall durch die sich öffnende Kerbe 200 austretenden Materialien werden durch das poröse Material der hohlzylinderförmigen Elektrode geleitet, so dass insbesondere partikuläre Bestandteile zurückgehalten werden und der Materialstrom gebremst wird.

Ein weiterer Vorteil der Anordnung der Kerbe 200 in dem außenliegenden kreisringförmigen Teilbereich 172 liegt darin, dass die Kerbe 200 bevorzugterweise von der auf dem Gehäusemantel der Zelle angebrachten Kunststofffolie bedeckt ist, die die Randbereiche der beiden Stirnseiten der zylindrischen Zelle ebenfalls bedeckt. Auch hierdurch wird im Berstfall der Ausstrom von Gasen und/oder Flüssigkeiten aus der Sollrissstelle weiter abgebremst.

**Fig. 7** illustriert die Anordnung der Kerbe 200 gemäß dem in Fig. 6 gezeigten Ausführungsbeispiel in einer Ansicht der Energiespeicherzelle 100 schräg von unten. Die Darstellung verdeutlicht die Anordnung der Kerbe mit einem streng linearen Verlauf im außenliegenden teilkreisförmigen Bereich 172 des Becherbodens.

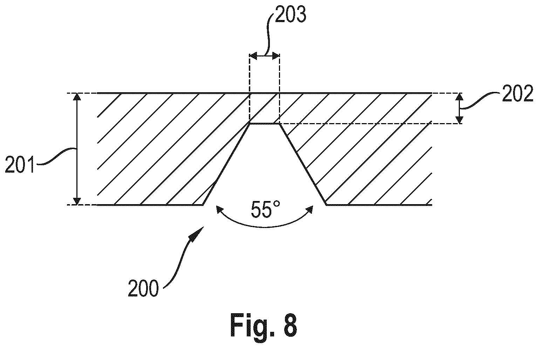

Aus **Fig. 8** gehen weitere bevorzugte Details zur Geometrie der Kerbe 200 hervor. Die Kerbe 200 weist einen trapezförmigen Querschnitt auf und ist zur Außenseite des Gehäusebodens hin offen. Die Kerbe 200 weitet sich in Richtung der Außenseite der Energiespeicherzelle. Der Öffnungswinkel beträgt in diesem bevorzugten Ausführungsbeispiel 55°. Die Wandstärke 201 des Gehäusebodens außerhalb des Bereichs der Kerbe 200 kann insbesondere 0,23 mm bis 0,24 mm betragen. Die Wandstärke 202 im Bereich des Bodens der Kerbe liegt in diesem bevorzugten Ausführungsbeispiel im Bereich von 0,05 mm bis 0,07 mm. Der Abstand 203 der Wandseiten am Boden der Kerbe, also die Breite der Kerbe in deren Bodenbereich, beträgt in diesem Ausführungsbeispiel bevorzugt im Bereich von 0,02 mm bis 0,03 mm. Bei einem Gehäusedurchmesser von 13,8 mm beträgt die Länge der Kerbe vorzugsweise 6 mm.

Diese bevorzugte Geometrie der Kerbe 200 ist bei einer Wandstärke 202 (Restwandstärke) im Bereich des Bodens der Kerbe mit 0,05 mm für einen Öffnungsdruck zwischen 40 bis 90 bar ausgelegt, wobei die Erfinder bei dieser konkreten Ausgestaltung der Kerbe eine enge Druckverteilung für den Berstdruck von 63 ± 1 bar feststellen konnten.

Wenn die Wandstärke 202 im Bereich des Bodens der Kerbe beispielsweise 0,07 mm beträgt, liegt der Öffnungsdruck der Kerbe bei 55 bis 105 bar.

Diese konkreten Geometrien der Kerbe 200 eignen sich insbesondere für handelsübliche Bauformen von Alkali-Mangan-Zellen, beispielsweise für Zellen vom Typ LR6 oder vom Typ LR03.

Durch die Anordnung der Kerbe 200 im metallischen Gehäuseboden und durch die entsprechende Gestaltung der Geometrie der Kerbe 200 lässt sich der Berstdruck sehr präzise und mit einer Standardabweichung von beispielsweise ± 1 bar einstellen. Die Erfinder konnten feststellen, dass bei einem Öffnen dieser Sollrissstelle kaum Flüssigkeit und keine festen Bestandteile aus dem Inneren der Zelle austreten. Dieses Verhalten der Kerbe 200 als Sollrissstelle wurde unter verschiedenen möglichen Fehlerszenarien getestet, beispielsweise bei einer Tiefenentladung der Zelle (< 0,1 V), bei einem externen Kurzschluss und/oder bei der Aufladung und Lagerung bei verschiedenen Temperaturen. In all diesen möglichen Fehlerfällen wurde festgestellt, dass mit einer Kerbe 200 in der vorgeschlagenen Form und Anordnung eine zuverlässige Druckentladungsfunktion realisiert wird, die ein unkontrolliertes Austreten von Flüssigkeiten und Feststoffen zuverlässig vermeidet.

Neben der zuverlässigen und für den Anwender besonders sicheren Berstfunktion durch die erfindungsgemäß vorgesehene Kerbe hat die erfindungsgemäße Energiespeicherzelle darüber hinaus den besonderen Vorteil, dass in der Deckelkonstruktion keine Berstfunktion vorgesehen sein muss, so dass die dort angeordnete Dichtung und der Deckel weitestgehend hohlraumfrei konstruiert werden können. Somit kann das Innenvolumen der Zelle maximal für elektrochemisches Aktivmaterial der Zelle genutzt werden.

Durch die Form und Geometrie der Kerbe und die Position der Kerbe im Becherboden der Zelle wird sichergestellt, dass sich nur ein ganz feiner Spalt im Berstfall öffnet und dass nur Gas und Elektrolyt, aber keine festen Bestandteile der Zelle entweichen. Gegenüber herkömmlichen Konstruktionen einer Berstmembran insbesondere in der Dichtung im Bereich der Deckelkonstruktion einer Zelle ist auch die Menge des austretenden Elektrolyts geringer, so dass hierdurch weniger Gefahr für den Benutzer ausgeht.

Bei der Anordnung der Kerbe im außenliegenden teilkreisförmigen Teilbereich des ersten Bereichs im Becherboden muss der aus der Zelle austretende Elektrolyt im Berstfall zunächst die außenliegende hohlzylinderförmige Elektrode, insbesondere die poröse Kathode, durchdringen. Auch dadurch werden der Druck und die Menge des austretenden Elektrolyts weiter reduziert und die potenzielle Gefährdung eines Benutzers minimiert.

## Patentansprüche

1. Elektrochemische Energiespeicherzelle (100) mit den Merkmalen:
a. Die Energiespeicherzelle (100) umfasst ein Gehäuse mit einem metallischen Gehäusebecher (140) und einem Gehäusedeckel (150);
b. Der Gehäusebecher (140) umfasst einen kreisrunden Becherboden und einen umlaufenden Gehäusebechermantel;
c. Die Energiespeicherzelle umfasst eine positive und eine negative Elektrode (110, 120), die in dem Gehäuse angeordnet sind;
d. Eine der Elektroden, insbesondere die positive Elektrode, ist als hohlzylinderförmige Elektrode (120) ausgebildet und umschließt einen Hohlraum, in dem die andere Elektrode (110), insbesondere die negative Elektrode, angeordnet ist;
e. Der Becherboden weist einen kreisringförmigen ersten Bereich (170), in dem die hohlzylinderförmige Elektrode (120) auf dem Becherboden aufsitzt, und einen kreisförmigen zentralen zweiten Bereich (180), der von dem ersten Bereich (170) umschlossen ist, auf; und
dem kennzeichnenden Merkmal:
f. Der Becherboden weist in dem kreisringförmigen ersten Bereich (170) mindestens eine Kerbe (200) auf, welche den Becherboden strukturell schwächt.

2. Energiespeicherzelle nach Anspruch 1 mit mindestens einem der folgenden zusätzlichen Merkmale:
a. Der kreisförmige zentrale zweite Bereich (180) bildet oder umfasst den tiefsten Bereich des Becherbodens;
b. Der kreisringförmige erste Bereich (170) umfasst einen außenliegenden kreisringförmigen Teilbereich (172), der mit dem Gehäusebechermantel einen Winkel von 80 bis 100°, insbesondere 90°, einschließt und der sich unmittelbar an den Gehäusebechermantel anschließt;
c. Der kreisringförmige erste Bereich (170) umfasst einen innenliegenden kreisringförmigen Teilbereich (171; 271), der einen Übergang zwischen den Ebenen des außenliegenden kreisringförmigen Teilbereichs (172) und des kreisförmigen zentralen zweiten Bereichs (180) bildet;

3. Energiespeicherzelle nach Anspruch 2 mit einem der folgenden zusätzlichen Merkmale:
a. Der innenliegende kreisringförmige Teilbereich (171) bildet eine Stufe zwischen den Ebenen des außenliegenden kreisringförmigen Teilbereichs (172) und des kreisförmigen zentralen zweiten Bereichs (180).
b. Der innenliegende kreisringförmige Teilbereich (271) bildet einen kontinuierlichen Übergang zwischen den Ebenen des außenliegenden kreisringförmigen Teilbereichs (172) und des kreisförmigen zentralen zweiten Bereichs (180).

4. Energiespeicherzelle nach Anspruch 2 oder Anspruch 3 mit dem folgenden zusätzlichen Merkmal:
a. Die mindestens eine Kerbe (200) befindet sich in dem innenliegenden kreisringförmigen Teilbereich (171; 271) des ersten Bereichs des Becherbodens.

5. Energiespeicherzelle nach Anspruch 2 oder Anspruch 3 mit dem folgenden zusätzlichen Merkmal:
a. Die mindestens eine Kerbe (200) befindet sich in dem außenliegenden kreisringförmigen Teilbereich (172) des ersten Bereichs des Becherbodens.

6. Energiespeicherzelle nach einem der vorhergehenden Ansprüche mit mindestens einem der folgenden zusätzlichen Merkmale:
a. Die Kerbe (200) findet sich auf der nach außen gerichteten Seite des Becherbodens;
b. Die Kerbe (200) ist nach außen hin nicht von einem metallischen Element bedeckt.

7. Energiespeicherzelle nach einem der vorhergehenden Ansprüche mit mindestens einem der folgenden zusätzlichen Merkmale:
a. Die Kerbe (200) ist zumindest abschnittsweise als Gerade ausgebildet;
b. Die Länge der Kerbe (200) beträgt maximal die Hälfte des Durchmessers des Becherbodens;
c. Die Länge der Kerbe (200) ist größer als die Breite des innenliegenden und/oder des außenliegenden kreisringförmigen Teilbereichs (171; 271; 172)).

8. Energiespeicherzelle nach einem der vorhergehenden Ansprüche mit einem der folgenden zusätzlichen Merkmale:
a. Der Becherboden weist die mindestens eine Kerbe (200) in dem innenliegenden kreisringförmigen Teilbereich (171; 271) auf, wobei die Kerbe (200) zumindest abschnittsweise als Gerade ausgebildet ist, und die als Gerade ausgebildete Kerbe oder deren als Gerade ausgebildeter Abschnitt ist derart ausgerichtet, dass sie/er auch extrapoliert den kreisförmigen zentralen zweiten Bereich (180) nicht schneidet.
b. Der Becherboden weist die mindestens eine Kerbe (200) in dem außenliegenden kreisringförmigen Teilbereich (172) auf, wobei die Kerbe zumindest abschnittsweise als Gerade ausgebildet ist, und die als Gerade ausgebildete Kerbe oder deren als Gerade ausgebildeter Abschnitt ist derart ausgerichtet, dass sie/er auch extrapoliert den innenliegenden kreisringförmigen Teilbereich (171) nicht schneidet.

9. Energiespeicherzelle nach einem der vorhergehenden Ansprüche mit mindestens einem der folgenden zusätzlichen Merkmale:
a. Die Kerbe (200) ist von einer auf der Außenseite des Gehäuses angeordneten Kunststofffolie (190) abgedeckt;
b. Die Kunststofffolie (190) ist auf den Gehäusebechermantel aufgebracht und deckt darüber hinaus zumindest teilweise den kreisringförmigen ersten Bereich (170), insbesondere den außenliegenden kreisringförmigen Teilbereich (172) des ersten Bereichs, des Becherbodens ab;
c. Die Kunststofffolie (190) ist ein Energiespeicherzellenetikett.

10. Energiespeicherzelle nach einem der vorhergehenden Ansprüche mit mindestens einem der folgenden zusätzlichen Merkmale:
a. Die Kerbe (200) weist einen trapezförmigen Querschnitt mit zwei Wandseiten und einem Boden und einer offenen Seite auf;
b. Die Kerbe (200) weitet sich ausgehend von dem Boden auf;
c. Die zwei Wandseiten schließen einen Winkel im Bereich von 50 bis 80°, vorzugsweise im Bereich von 53 bis 57°, ein.

11. Energiespeicherzelle nach Anspruch 10 mit mindestens einem der folgenden zusätzlichen Merkmale:
a. Die Wandstärke (202) des Becherbodens ist im Bereich des Bodens der Kerbe um 60 bis 90 %, vorzugsweise um 70 bis 80 %, gegenüber der Wandstärke (201) des Becherbodens in der unmittelbaren Umgebung der Kerbe reduziert;
b. Der Becherboden weist in der unmittelbaren Umgebung der Kerbe eine Wandstärke (201) von 0,15 bis 0,30 mm, vorzugsweise von 0,20 bis 0,25 mm, auf;
c. Der Becherboden weist im Bereich des Bodens der Kerbe eine Wandstärke (202) von 0,03 bis 0,09 mm, vorzugsweise von 0,04 bis 0,08 mm, besonders bevorzugt von 0,05 bis 0,07 mm, auf.

12. Energiespeicherzelle nach Anspruch 10 oder Anspruch 11 mit dem folgenden zusätzlichen Merkmal:
a. Die Wandstärke (202) des Becherbodens beträgt im Bereich des Bodens der Kerbe das Ein- bis Vierfache des Abstands (203) der Wandseiten am Boden der Kerbe.

13. Energiespeicherzelle nach einem der Ansprüche 10 bis 12 mit mindestens einem der folgenden zusätzlichen Merkmale:
a. Der Abstand (203) der Wandseiten am Boden der Kerbe beträgt 5 bis 30 %, vorzugsweise 8 bis 15 %, der Wandstärke (201) des Becherbodens in der unmittelbaren Umgebung der Kerbe;
b. Der Abstand (203) der Wandseiten am Boden der Kerbe liegt in einem Bereich von 0,01 bis 0,08 mm, vorzugsweise von 0,02 bis 0,07 mm.

14. Energiespeicherzelle nach einem der vorhergehenden Ansprüche mit dem folgenden zusätzlichen Merkmal:
a. Die mindestens eine Kerbe (200) der Energiespeicherzelle ist derart ausgebildet, dass der Becherboden bei einem Druck einem Bereich von 40 bis 105 bar entlang der Kerbe (200) aufreißt.

15. Energiespeicherzelle nach einem der vorhergehenden Ansprüche mit mindestens einem der folgenden zusätzlichen Merkmale:
a. Die positive Elektrode ist eine Manganoxid-Elektrode;
b. Die negative Elektrode ist eine Zinkelektrode;
c. Zwischen der positiven Elektrode und der negativen Elektrode ist ein Separator (130) angeordnet;
d. Die Energiespeicherzelle umfasst einen alkalischen Elektrolyten.
